# EUROPÄISCHE PATENTSCHRIFT

(11) **EP 2 121 304 B1**
(45) Veröffentlichungstag und Bekanntmachung des Hinweises auf die Patenterteilung: **28.01.2015**
(21) Anmeldenummer: 07857750.9
(22) Anmeldetag: 18.12.2007
(51) Int. Cl.: B29C 65/44, B29L 31/10, B29K 305/00, B29K 309/02, B29C 65/46, B29C 65/48, B29C 65/00, B29C 45/14, B29K 25/00, B29K 55/02, B29K 81/00, B29K 105/06, B29K 309/08, B32B 15/08, B29K 23/00, B29L 9/00, B62D 29/00, B29K 101/12, B29L 31/30, B29K 705/00, C09J 5/06, B29K 77/00, B29K 67/00, B29K 69/00, B29K 79/00

(54) **VERFAHREN ZUR HERSTELLUNG EINES AUS KUNSTSTOFF UND METALL BESTEHENDEN HYBRID-BAUTEILES SOWIE METALL-KUNSTSTOFF-VERBUNDKÖRPER**
METHOD FOR PRODUCING A HYBRID PLASTIC/METAL COMPONENT AND METAL/PLASTIC COMPOSITE
PROCÉDÉ DE FABRICATION D'UN COMPOSANT HYBRIDE CONSTITUÉ DE MÉTAL ET DE PLASTIQUE ET CORPS COMPOSITE MÉTAL-PLASTIQUE

(30) Priorität: 24.01.2007 DE 102007004581; 27.02.2007 DE 102007009928
(43) Veröffentlichungstag der Anmeldung: 25.11.2009
(73) Patentinhaber: Hühoco Metalloberflächenveredelung GmbH, 42279 Wuppertal (DE)
(72) Erfinder: WELSCH, Klaus, 58339 Breckerfeld (DE)
(74) Vertreter: Patentanwälte Dr. Solf & Zapf
(86) Internationale Anmeldenummer: PCT/EP2007/064123
(87) Internationale Veröffentlichungsnummer: WO 2008/089873

(56) Entgegenhaltungen:
- EP-A- 0 031 701

## Beschreibung

Die vorliegende Erfindung betrifft ein Verfahren zur Herstellung eines aus einer Kunststoffkomponente und aus einer Metallkomponente bestehenden Hybrid-Bauteiles gemäß dem Oberbegriff des Anspruchs 1 sowie einen Metall-Kunststoff-Verbundkörper, bestehend aus einer Metallkomponente und aus einer aus einem thermoplastischen Kunststoff bestehenden Komponente sowie aus einer zwischen den Komponenten angeordneten Haftvermittlerschicht gemäß dem Oberbegriff des Anspruchs 1.

In verschiedenen industriellen Bereichen hat die Forderung nach Leichtbau und Wirtschaftlichkeit zur Entwicklung und zum Einsatz von Hybrid-Bauteilen geführt, in denen zwei oder mehr Werkstoffe, vorzugsweise mindestens eine Kunststoff- und eine Metallkomponente, miteinander kombiniert sind. Hybrid-Bauteile weisen ein Eigenschaftsbild auf, das ein einzelner Werkstoff in der Regel nicht bieten kann. Insbesondere im Automobilbau finden derartige Hybrid-Bauteile eine immer weitere Verbreitung, weil ein Kunststoff-Metall-Verbund eine große Stabilität aufweist und dabei gleichzeitig eine Gewichtsersparnis möglich macht.

Als Stand der Technik, der beispielsweise in den Fachartikeln "Dachrahmen in Hybridbauweise" von Anja Jäschke und Ulrich Dajek, Sonderdruck aus VDI-Tagungsband Nr. 4260 (2004), S. 25-45, und "Kunststoff und Metall im festen Verbund" von Ulrich Endemann, Stefan Glaser und Martin Völker, in KU Kunststoffe, Jahrg. 92 (2002) 11, S. 110-113 dargestellt ist, sind in diesem Zusammenhang formschlüssige Verbünde der Komponenten anzusehen, bei denen ihre gegenseitige Verbindung insbesondere durch Spritzgießen oder nachträgliches Fügen hergestellt wird.

In dem letztgenannten Artikel wird dabei ausgeführt, dass bei Kunststoff-Metall-Hybridstrukturen die Verbindung zwischen Kunststoff und Metall grundsätzlich auf zwei Arten hergestellt werden kann, und zwar einerseits durch ein Anspritzen des Kunststoffs an ein Metallblech im Spritzgießprozess, was als "In Mould Assembly" (IMA) bezeichnet wird, oder andererseits durch ein Zusammenfügen einer Kunststoff- und einer Metallstruktur, was unter dem Namen "Post Moulding Assembly" (PMA) subsumiert wird.

Gemäß der IMA-Technik, auf die sich der erstgenannte Fachartikel bezieht, wird ein fertig geformtes Blech in das Spritzgießwerkzeug eingelegt und an diskreten Stellen mit einer angespritzten Kunststoffstruktur formschlüssig verbunden. Am Ende des Spritzgießzyklus kann das Hybrid-Bauteil aus dem Werkzeug entnommen werden. So wird in dem ersten Artikel ausgeführt, dass nach dem Einlegen und Fixieren einer dünnwandigen, tiefgezogenen, gestanzten und in sich noch instabilen Blechstruktur in ein Spritzgusswerkzeug eine aus einem geeigneten Werkstoff bestehende Kunststoffstruktur in einem Standard-Spritzgießverfahren angespritzt wird. Bei dem Bauteil handelt es sich dabei im Besonderen um einen Dachrahmen eines Kraftfahrzeugs, der die Seitenteile einer Rohkarosserie verbindet und gleichzeitig ein Auflager für die Frontscheibe des Kraftfahrzeugs bildet. Ein solcher Dachrahmen besteht herkömmlicherweise aus zwei Stahlblechen, die miteinander verschweißt ein Profil mit zweischaligem Blechaufbau bilden. Mit Hilfe der Hybridtechnik, die der Artikel beschreibt, kann das zur Verstärkung des Dachrahmens nötige Blech durch eine eingesetzte Kunststoff-Rippenstruktur ersetzt werden.

Im Herstellungsverfahren derartiger oder ähnlicher Metall-Kunststoff-Verbund-körper ist es bekannt, auf dem metallischen Körper eine Haftvermittlerschicht für den anzuspritzenden thermoplastischen Werkstoff vorzusehen.

So beschreibt die DE 38 18 479 A1 einen Verbundwerkstoff, der eine Metallschicht, einen Haftvermittler und eine Polypropylenschicht enthält. Die Haftvermittlerschicht dient dabei dazu, die Metallschicht und die Polypropylenschicht stoffschlüssig, mittels einer hochadhäsiven Bindung, zusammenzuhalten. Der Haftvermittler besteht dabei im Wesentlichen aus einem Epoxidharz auf Basis von Bisphenol A und die Polypropylenschicht enthält in der Masse ein pfropfbares Silan sowie ein Peroxid als Vernetzungsmittel oder ist an ihrer der Metallschicht zugewandten Oberfläche mit einer Mischung aus pfropfbarem Silan und Peroxid behandelt. Der Haftvermittler wird nach einer Vorreinigung der Metallschicht, beispielsweise eines Metallbleches, unverdünnt oder mittels geeigneter Lösungsmittel auf eine gewünschte Viskosität eingestellt, in Mengen von 1 bis 10 g/m² aufgetragen und einer thermischen Behandlung bei 170 °C bis 190 °C unterzogen, die etwa 5 bis 20 Minuten dauert. Die so vorbehandelten Oberflächen werden dann direkt einem Vorver-bund oder einer Formteilherstellung zugeführt. Vorteilhaft ist dabei, dass die Metallschicht dabei vor oder nach der Beschichtung mit dem Haftvermittler nach einem für Metall üblichen ein- oder mehrstufigen Tiefziehprozess bei Raumtemperatur zu einem Metall-Vorformteil verformt werden kann. Technologisch nachteilig ist, dass zur Herstellung des Haftvermittlers im Produktionsprozess ein Zweikomponentensystem mit genau einzuhaltendem Verhältnis zwischen dem zum Einsatz kommenden Epoxidharz und einem Härter sowie gegebenenfalls einem Beschleuniger verwendet werden muss.

In der DE 195 35 915 A1, die einen Haftvermittler für die Verbindung von insbesondere aus Polypropylen bestehenden Kunststofffolien mit vorzugsweise aus Metall bestehenden Substraten betrifft, ist ebenfalls ein bekannter Metall-Kunststoff-Verbundkörper beschrieben. Der Haftvermittler enthält dabei ein gepfropftes Polypropylen-Random-Blockcopolymerisat und wenigstens einen UV-Stabilisator. U. a. wird eine Beschichtung von 0,04 bis 1 mm dicken Metallblechen, wie Schwarzblech, Weissblech, Aluminium und verschiedenen Eisenlegierungen, die gegebenenfalls mit einer Passivierungsschicht auf der Basis von Nickel-, Chrom und Zinkverbindungen versehen sind, beschrieben.

Die EP 0 031 701 A2 beschreibt ein laminiertes Produkt aus einer Metallfolie und einem thermoplastischen Kunststofffilm, die durch einen Klebstoff mit spezieller chemischer Zusammensetzung aneinander gebunden sind. Das Produkt wird nach einem gattungsgemäßen Verfahren hergestellt, wobei die Komponenten mittels unter Druck stehender Rollen aneinander gepresst werden. Beim Laminieren erfolgt über eine beheizte Rolle ein Wärmeeintrag in die Metallfolie. Der Klebstoff wird in einem Extruder aufgeschmolzen, als Film extrudiert und zwischen die zu verbindenden Komponenten gebracht. Die Verbundfolie wird über Transportrollen abgeführt und dann aufgerollt.

Auch die JP 62 053817 A beschreibt ein Verfahren zur Herstellung eines Metall-Kunststoff-Verbundkörpers. Dabei werden zwei, jeweils insbesondere unter Einsatz eines PUR-Klebstoffs mit PET-Folien vorlaminierte Aluminiumbahnen durch Induktion erhitzt und unter Druck verbunden. Das Andrücken der zu verbindenden Komponenten aneinander erfolgt bei einem Ziehen durch einander gegenüberstehende, gegeneinander bewegliche Backen, von denen eine die Induktionsspule enthält, wobei ein wärmebeständiges elastisches Material, wie Silikongummi, zur Wärmeisolation dient.

Die US 4 872 590 A bezieht sich auf die Herstellung einer Dose, wobei als ein Verfahrensschritt das Umbördeln von laminierten Randbereichen umfasst ist, die aus Kunststoff- und aus Metallschichten bestehen.

Gemäß der US 4 210 477 A kann ein Laminat aus einer Metallfolie und einem durch Wärme zum Erweichen zu bringenden folienartigen Kunststoffmaterial verarbeitet werden, indem das Laminat mit Randüberlappung in Röhrenform gebracht wird. Beim Führen des Röhrenkörpers durch eine Induktionsspule erfolgt eine Heißversiegelung der Ränder durch den Kunststoff. Auch die US 4 660 354 A und die US 4 678 713 A beschreiben die Nutzung hochfrequenter elektromagnetischer Energie als Heizmittel, insbesondere zur Erweichung von in laminierten Verbundschichten enthaltenen Polymeren in Verpackungsmaterialien und -behältern.

Insbesondere bei der Beschichtung von Metallteilen, die mit Polyamid umgossen werden, besteht das Problem, dass durch unterschiedliche Werkstoffeigenschaften bei der Fertigung - beispielsweise durch Schrumpf - Abhebungen entstehen, die z. B. das Eindringen von Wasser in das fertige Produkt möglich machen. Zur Beseitigung dieser Undichtigkeiten sind separate technologisch aufwändige Verfahren, wie beispielsweise Imprägnierverfahren, notwendig.

Gemäß der oben erwähnten PMA-Technik werden Blech- und Kunststoffteil jeweils separat hergestellt. Nach dem Spritzgießen des Kunststoffteils muss dieses in einem folgenden Arbeitsschritt mit dem Blechteil verbunden werden. Dabei werden beispielsweise Öffnungen in das Metallteil eingebracht, die ein Durchfließen des Kunststoffes ermöglichen. Konstruktiv kann man dabei eine Art Nietkopf vorsehen, der durch den Kunststoff gebildet ist und die Verbindung herstellt. Das Post-Moulding-Verfahren basiert beispielsweise auf einem Durchstecken eines Kunststoff-Bolzens durch eine Öffnung im Metallteil, der dann warm "vernietet" wird. Zur Nietkopfformung wird der Kunststoff lokal erweicht, was bevorzugt durch ein heißes Gas erfolgt. Die Positionen der Kunststoffstifte und der zugehörigen Bohrungen im Metallblech müssen dabei genau zusammenpassen. Dies wird durch die unterschiedlichen Wämeausdehnungskoeffizienten von Kunststoff und Metall sowie durch einen Verzug des Kunststoffteils erschwert. Als Folge müssen die Bohrungsdurchmesser auch bei relativ kleinen Bauteilen meist größer als die Stiftdurchmesser ausgeführt werden. Die Verbindung garantiert keine dauerhafte Verspannung, sondern kann sich z. B. beim späteren Durchfahren von Temperaturzyklen lockern.

Bei der Gestaltung des Kunststoff- und des Blechteils gemäß dem PMA verfügt ein Konstrukteur aber über eine deutlich größere Gestaltungsfreiheit als bei Anwendung des In-Mould-Verfahrens. Das PMA ermöglicht auch eine beanspruchungsgerechte Konstruktion des Bauteils, die sich mit dem IMA nicht realisieren lässt, und eine verbesserte Funktionsintegration. Eine Blechstruktur kann beim PMA mit größeren Dickentoleranzen hergestellt werden, da das Blech nicht im Spritzgießwerkzeug abgedichtet werden muss. Weitere Vorteile des PMA bestehen darin, dass das Spritzgießwerkzeug bezüglich Aufbau und Toleranzen einfacher ausgeführt werden kann, eine Zykluszeit zur Herstellung eines Hybrid-Bauteiles kürzer ist, wenn der Montagevorgang weniger Zeit als das Spritzgießen eines Kunststoffteils erfordert und dass ein zu einem Verzug führender, durch die Verarbeitungsschwindung des Kunststoffs beim IMA verursachter Bimetall-Effekt nicht auftritt. Aufgrund der größeren Gestaltungsfreiheit als beim IMA können mit dem PMA die gleichen mechanischen Eigenschaften bei geringeren Bauteilabmessungen und geringerem Bauteilgewicht erreicht werden. Ein Haftvermittler ist bei Anwendung des PMA nicht notwendig.

Ob ein Kunststoff-Metall-Hybridbauteil nach dem PMA letztendlich aber günstiger hergestellt werden kann, hängt wesentlich von der Art der verwendeten Verbindungstechnik ab. Bei unter diesem Aspekt einsetzbaren Verfahren wird dabei in dem genannten Fachartikel grundsätzlich unterschieden zwischen Verbindungstechniken, die ein separates Verbindungselement erfordern, wie z. B. Blindnieten, Stanznieten und Schrauben, und solchen, die ohne Zusatzteile auskommen. Die letztgenannten Verbindungstechniken werden dabei als zumeist wirtschaftlicher bewertet und für einen bevorzugten Einsatz vorgesehen, sofern sie in der Lage sind, die sich jeweils stellenden mechanischen Anforderungen zu erfüllen.

Als eine solche neue Verbindungstechnik wird in dem oben an zweiter Stelle genannten Artikel das "Kragenfügen" ("Collar loining") vorgestellt und dessen Vorteile gegenüber dem Verfahren mit Nietkopfformung erläutert. Dieses Verfahren besteht im Wesentlichen aus drei Schritten. Zunächst wird in dem Metallblech eine Bohrung hergestellt, dann an dieser Stelle mit Hilfe eines Stempels ein sogenannter Kragen in das Blech gezogen, der schließlich im dritten Schritt direkt in die Wand eines Kunststoffteils eingepresst wird, wobei durch das Einpressen, welches in der Regel bei Raumtemperatur erfolgt, der Kunststoff plastisch verformt wird. Aufgrund der speziellen Form des Kragens ergibt sich auf diese Weise ein fester formschlüssiger Verbund zwischen Metallblech und Kunststoff. Die vorgestellte Technik ist in hohem Maß toeranzunempfindlich hinsichtlich der Position der Verbindungspunkte, erfordert keine spezielle Vorbereitung des Kunststoffteils und kann sowohl für unverstärkte wie für verstärkte Thermoplaste eingesetzt werden.

Ein weiterer Gesichtspunkt, der bei einem Verfahren zur Herstellung eines aus einer Kunststoffkomponente und aus einer Metallkomponente bestehenden Hybrid-Bauteiles zu beachten ist, ist das Vorhandensein oder die Herstellungsmöglichkeit von sogenannten KTL-Schichten. Unter KTL versteht man dabei eine katodische Elektrotauchlackierung, die auch als sogenannte Kataphorese als spezielles Grundierungsverfahren bekannt ist. Die durch dieses Verfahren erzeugten Schichten können einerseits Aufgaben für den Korrosionsschutz erfüllen, z B. für die Stahlteile einer Fahrzeugkarosse, und andererseits als Haftuntergrund für einen späteren Lackauftrag dienen. Das zu beschichtende Teil wird dabei in ein elektrisch isoliertes Tauchbecken gebracht, welches ein mit Wasser verdünnbares Lackmaterial enthält. Über spezielle Elektroden wird nach dem Eintauchen in das Becken ein Stromfluss über den leitfähigen Lack zu dem zu beschichtenden Teil hergestellt. Nach der chemischen Umsetzung des Bindemittels, bei der eine Koagulation erfolgt, entsteht auf den elektrisch leitfähigen metallischen Oberflächen ein geschlossener Lackfilm, der anschließend - beispielsweise in einem Trocknenofen 40 Minuten bei ca. 200 °C - eingebrannt wird, wobei ein Vernetzungsvorgang abläuft. Da Kunststoffe im Allgemeinen elektrisch nicht leitfähig ist, haften KTL-Schichten auf Hybrid-Bauteilen nicht, bzw. eben nur auf den freiliegenden metallischen Oberflächenbereichen.

Wesentliche Voraussetzung für den festen Verbund bei der bekannten Herstellung eines aus einer Kunststoffkomponente und aus einer Metallkomponente bestehenden Hybrid-Bauteiles ist das Vorhandensein eines Formschlusses. Dieser lässt sich z. B. bei dem beschriebenen Kragenfügen durch die gezielte Herstellung einer Rille außen am Kragen erreichen. Diese Rille ist entweder eine Folge des Kragenziehens oder wird mit Hilfe einer entsprechend geformten Matrize vor dem Kragenziehen in das Blech eingeprägt. Auch an der Kragenstirnseite lässt sich durch eine geeignete Prozessführung ein Hinterschnitt erzeugen.

Auch beim IMA erfüllt das Umschließen von metallischen Kanten durch den thermoplastischen Kunststoff den Zweck der Herstellung einer formschlüssigen Verbindung, wobei die haftmittelbeschichteten metallischen Komponenten hinterspritzt oder als Einlegeteile umspritzt werden. Problematisch ist dabei, dass die Haftvermittler, die z. B. im Coil-Coating-Verfahren auf Metallbänder aufgebracht werden können, thermisch aktiviert werden müssen. Das bedeutet, dass die Wärmeenergie der flüssigen Kunststoff-Masse bzw. - schmelze, welche auf das Metallteil bzw. den Haftvermittler auftrifft, ausreichen muss, um diese thermische Aktivierung zu bewerkstelligen. Unterstützen kann man diesen Vorgang durch das Beheizen des Spritzgießwerkzeuges bzw. insbesondere der Kavität des Werkzeugs, was aber durch das physikalische Verhalten des Kunststoffes bei der Abkühlung, insbesondere durch Schrumpfung bzw. Schwindung, sowie auch durch länger werdenden Zyklus-Zeiten begrenzt ist. Außerdem wird dabei lediglich die Wärmeableitung des Metallteiles vermindert, dieses selbst aber kaum aktiviert bzw. erwärmt. So kommen Verbindungen zwischen Haftvermittler und Kunststoff zustande, die bei der zerstörenden Prüfung allenfalls gute Adhäsionskräfte aufweisen.

Ein Bruch im Kunststoff ist nur schwer zu bewerkstelligen, ist in der Regel aber, als Gütekriterium, verlangt.

Der vorliegenden Erfindung liegt die Aufgabe zu Grunde, ein hinsichtlich seiner Verbindungstechnik im Sinne eines verringerten Aufwands verbessertes Verfahren der eingangs genannten Art sowie einen Metall-Kunststoff-Verbundkörper zu schaffen, der sich, insbesondere bei hoher mechanischer Beanspruchbarkeit, durch eine einfache und kostengünstige Herstellungsweise auszeichnet. Vorzugsweise sollen dabei die Metallschicht und der thermoplastische Werkstoff derart fest aneinander gebunden sein, dass eine Abhebung voneinander auch bei hoher mechanischer Beanspruchung nicht auftritt, wobei aber auch die Vorteile der bekannten Hybrid-Bauteile, wie z. B. mögliche Schweißbarkeit und KTL-Beschichtung, bewahrt bleiben sollen.

Diese Aufgabe wird durch ein Verfahren mit den Merkmalen des Anspruchs 1 gelöst, wonach die Kunststoffkomponente ein Bauteil ist, das einen zur Verbindung mit der Metallkomponente bestimmten Spitzenbereich aufweist, der nach einer Erwärmung der Metallkomponente und des Haftvermittlers auf die mit dem Haftvermittler bedeckte Metallkomponente aufgestaucht wird, wobei ein in der Matrix oder dem Stempel angeordnetes Heizelement die zum Fügen notwendige Wärme erzeugt, welche über den Haftvermittler an die Kunststoffkomponente weitergeleitet wird, so dass sich in einer Grenzfläche zwischen dem Haftvermittler und der Kunststoffkomponente mindestens die Temperatur der Erweichung der Kunststoffkomponente einstellt, aber nicht die Temperatur deren thermischer Zersetzung erreicht wird, wobei der Haftvermittler eine ausreichende thermische Aktivierung zu einer Reaktion mit der Kunststoffkomponente erfährt, jedoch unter der Wärmeeinwirkung nicht zerfließt, und wobei ein Anpressdruck und die Temperatur derart eingestellt werden, dass sich eine orthogonal zur Oberfläche der Metallkomponente verlaufende Länge der Kunststoffkomponente unter Bildung eines gestauchten Bereiches und des stoffschlüssigen Verbunds zwischen der Kunststoffkomponente und dem Haftvermittler verkürzt.

Das erfindungsgemäße Fügen der Teile mittels eines, insbesondere heißsiegelfähigen, Haftvermittlers zeigt eine Lösung auf, die viele Vorteile aufweist. Bei diesem Prozess kann insbesondere der Haftvermittler - z. B. in einem Coil-Coating-Verfahren - vor dem Fügen als Schicht auf das Metallteil aufgebracht und so stark vernetzt werden, dass ein dadurch entstehender Trockenfilm hart, aber elastisch ist und fest am Metallträger haftet. Auch darf der Haftvermittler unter Wärmeeinwirkung nicht zerfließen. Das KunststoffBauteil wird nun auf das Metallteil aufgepresst oder in das Metallteil eingepresst. Auf die Ausbildung einer formschlüssigen Verbindung und das Vorsehen aller damit verbundenen technischen Maßnahmen, wie die konstruktive Ausführung von Hinterschneidungen, Durchgangsöffnungen, Rillen oder Kragen, kann dabei vorteilhafterweise verzichtet werden.

Das erfindungsgemäße Fügen der Teile bzw. Komponenten kann insbesondere als Heißsiegelvorgang aufgefasst werden, bei dem die notwendige Wärmeenergie zunächst in das Metallteil und in ein darüber befindliches Beschichtungssystem eingeleitet wird, in dem zumindest eine oberste Schicht aus dem Haftvermittler gebildet ist. Die zum Siegeln notwendige Wärme kann dabei mit Vorteil über Heizelemente, wie z. B. Induktionsschleifen, die in einer Matrix oder auf einem Stempel angeordnet sind, wo die Metallkomponente aufgenommen wird, erzeugt werden. Der Haftvermittler wiederum hat Kontakt zum Kunststoff-Fügeteil und leitet die Wärmeenergie direkt an das Kunststoff-Fügeteil weiter. In der Grenzschicht Haftvermittler/Kunststoff findet ein oberflächiges Aufschmelzen von Haftvermittler und Kunststoff-Fügeteil statt, das durch einen definierten Anpressdruck unterstützt wird. Die thermische Beweglichkeit der Kunststoff-Moleküle wird dabei so groß, dass die Molekülketten im thermoplastischen Bereich aneinander abgleiten und sich zur Ausbildung der stoffschlüssigen Verbindung miteinander "verschlaufen" können. Dieser Zustand wird dann bei der Abkühlung eingefroren. Bedingung für eine gute Verbindung der Komponenten ist somit eine Arbeitstemperatur, die über der Erweichungstemperatur, aber in jedem Fall unterhalb des Bereiches der thermischen Zersetzung der beteiligten Polymere liegt.

Der thermoplastische Werkstoff der Kunststoffkomponente kann dabei bevorzugt aus einem Polyamid bestehen, wobei der Haftvermittler der Haftvermittlerschicht aus einem amidhaltigen Drahtlack gebildet ist. Es ist aber auch möglich, andere an sich - beispielsweise vom Spritzgießen her - bekannte Kunststoff-Haftvermittler-Paarungen einzusetzen, wie diese exemplarisch in den oben erwähnten Dokumenten DE 38 18 479 A1 und DE 195 35 915 A1 beschrieben sind.

Des Weiteren kann die Haftvermittlerschicht auch als Doppelschicht ausgebildet sein, d. h. sie kann zumindest aus zwei Schichten bestehen, wobei sie mindestens eine unmittelbar auf dem metallischen Träger angeordnete Primerschicht und eine darüber liegende Coverschicht umfasst, die zur Bindung an den thermoplastischen Werkstoff bestimmt ist. In den beiden Teilschichten kann dabei zum Beispiel ein Amid eines Drahtlacks in unterschiedlicher Zusammensetzung vorliegen, wie zum einen Teil als vollständig polymerisiertes Polyamid, und zum anderen Teil modifiziert, so dass es als Coverschicht einen Schutzabschluss - z. B. gegen eine schädliche Einwirkung von Luftfeuchtigkeit - bewirkt.

Zur Erzeugung einer elektrischen Leitfähigkeit, welche die Voraussetzung für eine Schweißbarkeit und die Möglichkeit des Aufbringens einer KTL-Beschichtung darstellt, kann auch vorgesehen sein, dass der Haftvermittler Anteile von Graphit enthält. Durch die Höhe des Graphitanteils kann dabei vorteilhafterweise in weiten Grenzen ein erwünschter spezifischer elektrischer Widerstand der Haftvermittlerschicht eingestellt werden.

Was die Ausbildung des erfindungsgemäßen Verbundkörpers betrifft, so ist für diese charakteristisch, dass die thermoplastische Komponente im Bereich ihrer Fügestelle an die Haftvermittlerschicht eine gestauchte Zone aufweist, die sich beispielsweise in einer seitlichen Aufwölbung, ausdrücken kann. Falls die Ausbildung einer solchen Aufwölbung im Bereich der Fügestelle, die auch als "Bart", Wulst oder pilzförmiger Rand bezeichnet werden könnte und die u. a. vorteilhafterweise dazu dienen kann, Maßabweichungen auszugleichen, jedoch nicht erwünscht ist, kann dem - wie nachstehend noch näher beschrieben - durch eine entsprechende verfahrensgerechte Gestaltung der Kunststoffkomponente entgegengewirkt werden.

Zusammenfassend sind die Vorteile der Erfindung in der Hauptsache die folgenden:
- Maßabweichungen, die z. B. durch innere Spannungen oder die geometrische Gestaltung der Bauteile bzw. Komponenten hervorgerufen sind, können weitgehend ausgeglichen werden.
- Die mechanischen Spannungen im Hybrid-Teil sind gering und in gewissem Maße konstruktiv steuerbar.
- Die Festigkeit des Kunststoff-Metall-Verbundes ist, insbesondere im Hinblick auf den eingangs dargestellten bevorzugten Anwendungsfall, ausgezeichnet. Bei der zerstörenden Prüfung erfolgt der Bruch im Kunststoff oder in der Grenzschicht.
- Kunststoff- und Metallteile können mit relativ geringem Aufwand hergestellt und miteinander verbunden werden, wobei auszuführende Prozessschritte, wie das Einlegen in eine Form oder das Vorwärmen des Metallteils keiner hohen Qualifikation der damit beauftragten Arbeitskräfte erfordern.
- Bei hygroskopischen Kunststoffen ist eine Trocknung vor dem Siegeln nicht notwendig. Ebenso entfällt eine Re-Konditionierung.
- Die Haftvermittlerschicht kann im Coil-Coating-Verfahren vollflächig aufgetragen werden und dabei auch für den Korrosionsschutz der Flächen, die nicht versiegelt werden, sorgen.
- Der Haftvermittler kann elektrisch leitfähig eingestellt werden, wodurch er schweißbar und geeignet für eine KTL-Beschichtung wird.

Was die Festigkeit der Verbindung zwischen der Kunststoffkomponente und Metallkomponente betrifft, für die - wie oben erwähnt - als Gütekriterium bei Belastung ein Bruch im Kunststoff anzusehen ist, so wurde dieses Gütekriterium - beispielsweise bei Einsatz von glasfaserverstärktem Polyamid als Material für die Kunststoffkomponente - erfüllt. Das bedeutet, dass die Zugfestigkeit der Verbindung zwischen der Kunststoff- und der Metallkomponente vorzugsweise im Bereich von etwa 8,5 ± 2,0 kN / cm² liegen kann.

Weitere vorteilhafte Ausführungen der Erfindung sind in den Unteransprüchen und der nachfolgenden speziellen Beschreibung enthalten. Anhand eines in der beiliegenden Zeichnung dargestellten Ausführungsbeispiels wird die Erfindung dabei näher erläutert. Es zeigen:
- Fig. 1: eine perspektivische Darstellung eines in Hybridbauweise ausgeführten Dachrahmens eines Pkw als Beispiel für einen erfindungsgemäßen Metall-Kunststoff-Verbundkörper,
- Fig. 2: eine schematische Darstellung zur Veranschaulichung des erfindungsgemäßen Verfahrens,
- Fig. 3: eine weitere, jedoch perspektivische, Darstellung zur Veranschaulichung des erfindungsgemäßen Verfahrens und der charakteristischen Ausbildung eines erfindungsgemäßen Metall-Kunststoff-Verbundkörpers,
- Fig. 4 und 5: zwei schematische Darstellungen zur Veranschaulichung von Verfahrensschritten des erfindungsgemäßen Verfahrens sowie der charakteristischen Ausbildung eines erfindungsgemäßen Metall-Kunststoff-Verbundkörpers in einer weiteren Ausführungsform der Erfindung,
- Fig. 6: einen Ausschnitt aus einer weiteren Ausführung eines erfindungsgemäßen Verbundkörpers im Querschnitt,
- Fig. 7: ein vergrößertes, auf einer lichtmikroskopischen Aufnahme basierendes Querschliffbild eines Ausschnitts aus einem erfindungsgemäßen Verbundkörper.

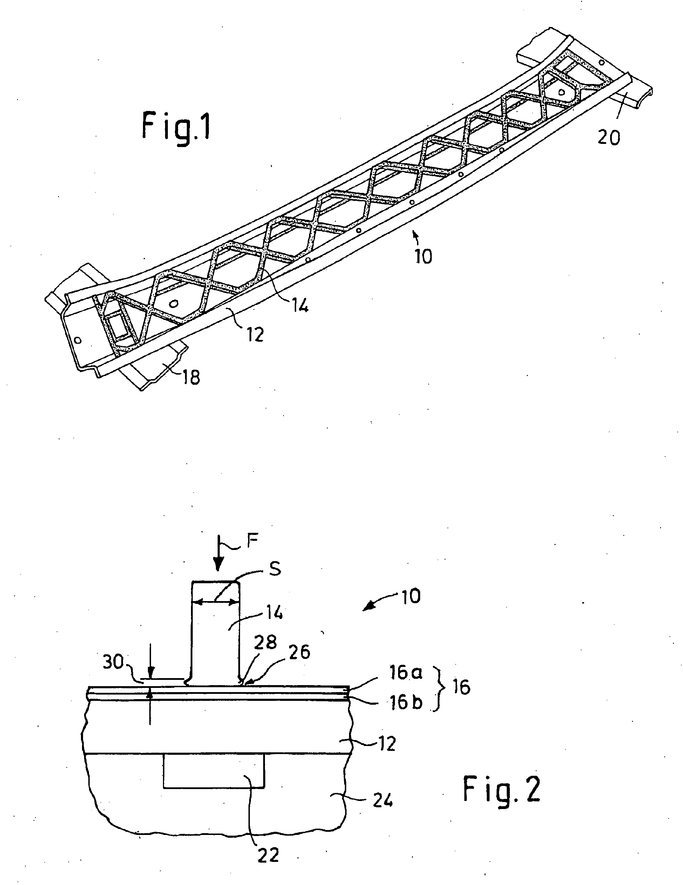

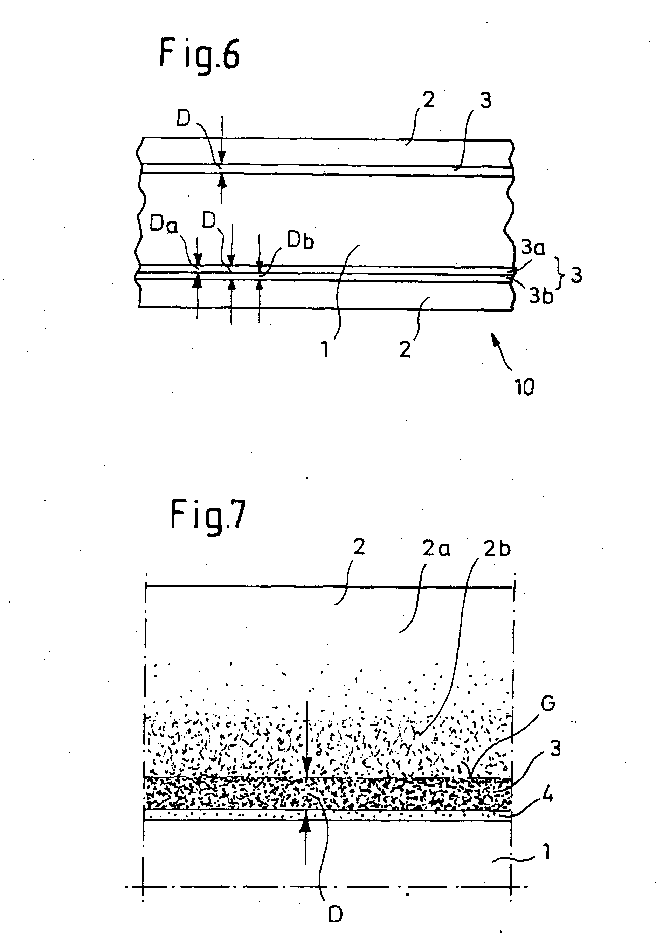

In Fig. 1 bis 5 der Zeichnung sind dieselben und einander entsprechende Teile mit denselben Bezugszeichen versehen, so dass sie auch jeweils nur einmal beschrieben werden. In Fig. 6 und 7 erfolgt statt dessen eine abweichende Kennzeichnung mit Bezugszeichen, wobei aber jeweils die entsprechenden Relationen zu Fig. 1 bis 5 der Zeichnung erläutert werden.

Bei dem in Fig. 1 dargestellten erfindungsgemäßen Metall-Kunststoff-Verbundkörper 10 handelt es sich - wie bereits erwähnt - um einen in Hybridbauweise ausgeführten Dachrahmen eines Personenkraftwagens. Der Metall-Kunststoff-Verbundkörper 10 besteht aus einer Metallkomponente 12 und aus einer aus einem thermoplastischen Kunststoff bestehenden Komponente 14 sowie aus einer zwischen den Komponenten 12, 14 angeordneten Haftvermittlerschicht 16, die den Darstellungen in Fig. 2, 3 sowie 6 und 7 entnommen werden kann.

Der Dachrahmen 10 verbindet die Seitenteile 18, 20 einer Karosserie des Kraftfahrzeugs und dient gleichzeitig als Auflager für dessen Frontscheibe. Der erfindungsgemäße Metall-Kunststoff-Verbundkörper 10 erfüllt somit eine tragende Funktion.

Die Metallkomponente 12 ist durch ein trogförmig ausgebildetes Blech, insbesondere ein Stahlblech, gebildet, während die Kunststoffkomponente 14 eine in den Blechtrog eingesetzte Rippenstruktur ist.

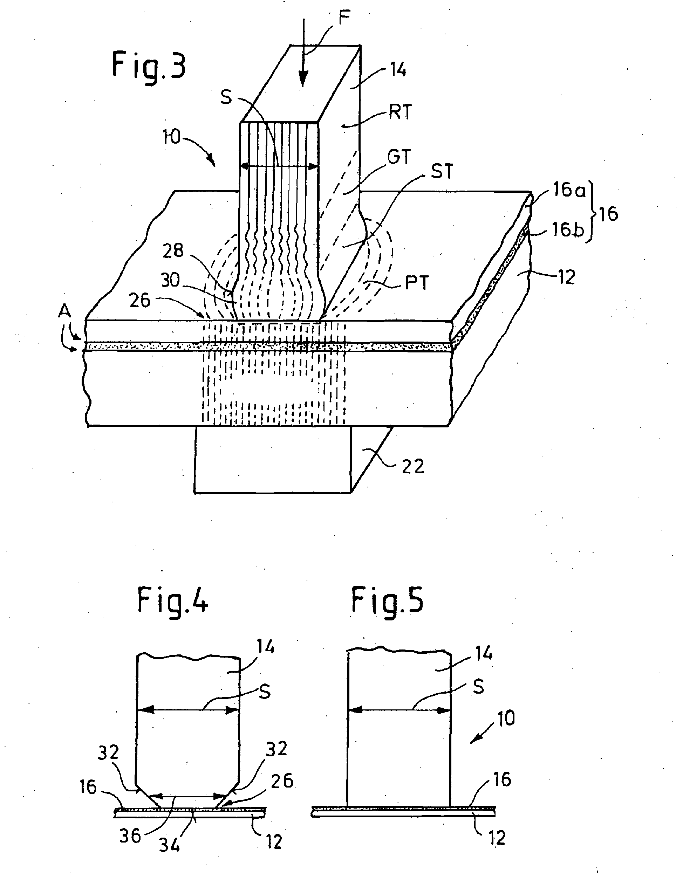

Der erfindungsgemäße Metall-Kunststoff-Verbundkörper 10 ist nach dem erfindungsgemäßen Verfahren hergestellt, das in einer bevorzugten Ausführungsform insbesondere durch Fig. 2 und 3 veranschaulicht wird. Das erfindungsgemäße Verfahren ist dabei dadurch charakterisiert, dass aus der Kunststoffkomponente 14 und aus der Metallkomponente 12 mittels des zwischen der Kunststoffkomponente 14 und der Metallkomponente 12 angeordneten Haftvermittlers 16 durch Fügen unter Wärmeeinwirkung und Druck (Anpresskraft F) ein stoffschlüssiger Verbund hergestellt wird, wobei über die Metallkomponente 12 eine Wärmeeintragung erfolgt. Der Haftvermittler 16 wird dabei über die Metallkomponente 12 aktiviert und leitet die Wärme weiter an die Kunststoffkomponente 14.

Der Haftvermittler 16 ist heißsiegelfähig und ist vor dem Fügen der Kunststoffkomponente 14 und der Metallkomponente 12 als Schicht auf die Metallkomponente 14 aufgebracht und so stark vernetzt, dass ein dadurch entstehender Trockenfilm hart, aber elastisch ist und fest auf der Metallkomponente 14 haftet. In bevorzugter Weise kann der Haftvermittler 16 in einem Coil-Coating-Verfahren aufgebracht werden, wie dies noch nachfolgend im Detail unter Bezugnahme auf Fig. 6 und 7 dargestellt wird.

Optional kann auch vorgesehen werden, dass der Haftvermittler 16 vor dem Fügen als Haftvermittlerschicht ausgebildet wird, die eine aus einer unmittelbar auf dem Metall der Metallkomponente 14 aufliegenden Primerschicht 16b und aus einer darüber liegenden Coverschicht 16a bestehende Doppelschicht ist. Dadurch kann die Adhäsion des Haftvermittlers 16 - in Fig. durch die Pfeile A - symbolisiert - Auch ein System mit mehr als zwei Schichten ist auf der Oberfläche der Metallkomponente 14 möglich, wobei aber der Haftvermittler 16 immer die oberste Schicht des Systems bilden sollte.

Die zum Fügen notwendige Wärme wird in bevorzugter Ausführung durch mindestens ein Heizelement 22, wie eine Induktionsschleife, erzeugt, das - wie Fig. 2 zeigt - insbesondere in bzw. an einer Matrix 24 oder einem Stempel angeordnet ist, wo die Metallkomponente 12 vor dem Fügen bzw. beim Fügen aufgenommen bzw. gelagert ist.

Die Höhe der Wärmeeinwirkung wird derart eingestellt, dass der Haftvermittler 16 eine ausreichende thermische Aktivierung zur Reaktion mit der Kunststoff-komponente 14 erfährt, jedoch unter der Wärmeeinwirkung nicht zerfließt. Es sollte zumindest die Erweichungstemperatur der Kunststoffkomponente 14, aber nicht die Temperatur deren thermischer Zersetzung erreicht werden.

Die Kunststoffkomponente 14 wird nach einer Erwärmung der Metallkomponente 12 und des Haftvermittlers 16 auf die mit dem Haftvermittler 16 bedeckte Metallkomponente 12 aufgepresst. Dabei wird die eingetragene Wärme auf die Kunststoffkomponente 14 übertragen, wobei sich in der Kunststoffkomponente 14 ein Temperaturprofil einstellen kann, wie dies in Fig. 3 dargestellt ist. In einiger Entfernung von der Fügestelle 26 besitzt die Kunststoffkomponente 14 dabei Raumtemperatur RT und ist hartelastisch. In einem sich in Richtung auf die Fügestelle 26 zu anschließenden Bereich GT erfolgt der Übergang zur Glastemperatur des thermoplastischen Kunststoffs, wobei dieser ein thermoelastisches Verhalten aufweisen kann. Schließlich erfolgt in einem Bereich ST, der sich unmittelbar an die Fügestelle 26 anschließt, der Übergang zur Schmelztemperatur, wobei eine Plastifizierung des Kunststoffs erfolgt. Auch der Haftvermittler 16, der auf der Metallkomponente 12 vollflächig oder nur partiell im Bereich der Fügestelle 24 aufgetragen sein kann, befindet sich in dem maßgeblichen Bereich PT auf einem Temperaturniveau, bei dem er in plastischem Zustand vorliegt. Die Verbindung kommt dann durch eine "Verschlaufung" der Molekülketten des Haftvermittlers 16 mit denen der Kunststoffkomponente 14 zustande, sobald die jeweiligen Grenzflächen anschmelzen. Der Vorgang kann auch mit dem Aufschweißen von Bolzen auf eine Platte mittels Widerstandsschweißung verglichen werden. Wie bei einer solchen Widerstandsschweißung kann der Kunststoff - als Charakteristikum für einen erfindungsgemäßen Verbundkörper 10 - durch Stauchung im Bereich der Fügestelle 26 einen "Bart" bilden, der auch als seitliche Aufwölbung 28, Wulst oder pilzförmiger Rand bezeichnet werden kann. Mit anderen Worten bewirkt die Stauchung beim Aufsetzen und Anschmelzen eines insbesondere flachen Kunststoffteiles eine "Aufpilzung" im Bereich der Kontaktflächen. Die Schmelze tritt seitlich dabei aus und bei der Erstarrung stellt sich so kein flächiger Kontakt der Fügeflächen ein. Die Länge der Kunststoffkomponente 14 verkürzt sich dabei im gestauchten Bereich 30 des erfindungsgemäßen Verbundkörpers 10 orthogonal zur Oberfläche der Metallkomponente 12, mit der die Kunststoffkomponente 14 verbunden wird.

Falls eine solche Aufwölbung 28 im gestauchten Bereich 30 nicht erwünscht ist, kann einer Ausbildung derselben durch eine entsprechende verfahrensgerechte Gestaltung der Kunststoffkomponente 14 entgegen gewirkt werden. Diese verfahrensgerechte Gestaltung der Kunststoffkomponente 14 kann-wie Fig. 4 und 5 zeigen - insbesondere in einer speziellen geometrischen Gestaltung der Fügekanten der Kunststoffkomponente 14 bestehen. Fig. 4 zeigt dabei die Metallkomponente 12 mit dem Haftvermittler 16 und die Kunststoffkomponente 14 vor dem bzw. beim Fügen und Fig. 5 den erfindungsgemäßen Verbundkörper 10 nach dem Fügen.

Unter dem beschriebenen Aspekt ist es von Vorteil, die Seitenflächen der Kunststoffkomponente 14 - wie dargestellt - mit einer Anfasung 32 zu versehen oder zu runden. Die Anfasung 32 kann dabei im Extremfall derart ausgeführt sein, dass die Kunststoffkomponente 14 in ihrem Spitzenbereich 34 - allgemein ausgedrückt - eine Querschnittsverjüngung 36 aufweist, die im Extremfall eine nur linien- oder - z. B. im Falle einer zylindrischen Form der Kunststoffkomponente 14 - eine nur punktförmige Ausbildung besitzt. Beim Verbinden kann dann die so vorbearbeitete Seitenfläche der Kunststoffkomponente 14 im plastischen Zustand eine Form annehmen, die gewährleistet, dass die Kunststoffkomponente 14 mit der vollen Materialdicke S auf der Metallkomponente 12 aufsitzt.

In Fig. 6, die einen Teilbereich einer weiteren Ausführung eines erfindungsgemäßen Verbundkörpers 10 zeigt, ist die Metallkomponente 12 als Metallschicht 1 ausgebildet. Der thermoplastischen Werkstoff der Kunststoffkomponente 14 ist mit dem Bezugszeichen 2 bezeichnet und eine Haftvermittlerschicht, die aus dem zwischen der Metallschicht 1 und dem thermoplastischen Werkstoff 2 angeordneten Haftvermittler 16 besteht, mit dem Bezugszeichen 3.

Der thermoplastische Werkstoff 2 besteht insbesondere aus Polyamid. Es ist aber auch möglich, dass als thermoplastischer Kunststoff ein anderer unverstärkter oder verstärkter oder gefüllter Kunststoff mit thermoplastischem Verhalten ist, wobei dieser Kunststoff amorph oder teilkristallin sein kann. So könnte es sich bei dem Kunststoff beispielsweise auch um einen Polyester, wie insbesondere Polyethylenterephthalat oder Polybutylenterephtalat, um ein Polyolefin, insbesondere Polypropylen oder Polyethylen, um Polystyrol, insbesondere syndiotaktisches Polystyrol, um ein Styrolacrylnitrilcopolymer, insbesondere ein Acrylnitril-Styrol-butadiencopolymer, um ein Polycarbonat, um ein Polypropylenoxid, Polyphenylensulfid, ein Polyimid, Polyketon, oder ein Blend aus diesen Werkstoffen handeln.

Der Haftvermittler 16 der Haftvermittlerschicht 3 ist aus einem amidhaltigen Drahtlack gebildet und enthält insbesondere ebenfalls Polyamid, wie es in dem kresolhaltigen Überzugslack 1223 oder den kresolfreien Backlacken 1208 und 1224, dem Backlack 1251 der Firma Wiedeking GmbH bzw. in den Drahtlacken E 8297 und E 8340 der Firma Herberts ® Electro Drahtlacke der Fall ist.

Ohne Verwendung von Haftvermittlern sind nur einige Kunststoffe geeignet für eine direkte Verbindung mit Metall. Die erreichbaren Adhäsionskräfte sind abhängig von der Beschaffenheit der Metalloberfläche (Reinheit; Rauhigkeit etc.) und von der Temperatur derselben beim Kontakt mit dem Kunststoff, der - wie beschrieben - bis in den Bereich seiner Schmelztemperatur erwärmt werden muss.

Als Haftvermittler 16 können mit Vorteil auch andere in organischen Lösemitteln gelöste Kunststoffe eingesetzt werden, die - ähnlich wie in dem hier dargestellten speziellen Ausführungsbeispiel der Erfindung - idealerweise artgleich mit dem zu siegelnden Kunststoff sein sollten, die mindestens aber eine ähnliche Struktur und ähnliche thermische Eigenschaften, wie beispielsweise Glastemperatur bzw. auch Kristallitschmelztemperatur, aufweisen.

Der Lösemittelanteil sollte, wenn eine Auftragung in einem Coil-Coating-Prozess erwünscht ist, im Sinne einer optimalen Verarbeitbarkeit bei etwa 50 bis 90 % (Masseprozent) und entsprechend der Festkörperanteil bei 10 bis 50 %, liegen, wobei davon 5 bis 10 % aus Bindemitteln, wie z. B. Phenol- oder Epoxidharzen, bestehen können. Durch Phenol- und Epoxidharze werden, wenn der aufgetragene Lack bzw. die den Haftvermittler 16 bildende Mischung thermisch behandelt, z B. eingebrannt, wird, Duromere gebildet, die dem Haftvermittler 16 eine auch bei Temperaturen im Bereich der Erweichungstemperaturen der thermoplastischen Komponenten des Haftver-mittlers erhöhte Festigkeit verleihen und beispielsweise mit Vorteil dafür sorgen, dass der Erweichungspunkt der Haftvermittlerschicht 3 höher liegt als der des Materials der zu verbindenden Kunststoffkomponente 14. So wird dem Temperaturgefälle Rechnung getragen, das sich bei der Durchführung des erfindungsgemäßen Verfahrens einstellt. Dabei ist es möglich, den Haftvermittler 16 auf verschiedenartige Weise zu modifizieren, beispielsweise durch bestimmte Lösungsmittel oder Zusatzstoffe. Als Lösungsmittel kommen dabei beispielsweise leichte aromatische Erdölfraktionen, Phenol, Kresol, Xylol, Benzylakohol sowie N-Methyl-2-pyrrolidon und N,N-Dimethylacetamid in Frage.

Im Falle des genannten Drahtlacks sollte dieser mit Vorteil einen Feststoffanteil von 8 bis 25 Masseprozent, vorzugsweise von 10 bis 16 Masseprozent, enthalten und je nach der bevorzugten Art der Auftragung, wie Aufsprühen, Gießen, Walzenauftrag oder Tauchen, bei 23 °C eine Viskosität von 250 bis 1500 mPas aufweisen.

Es kann auch vorgesehen sein, dass der Drahtlack (bzw. der Haftvermittler 16 im Allgemeinen) zur Erzeugung einer elektrischen Leitfähigkeit zusätzliche Anteile von Graphit enthält. Durch die Höhe des Graphitanteils kann dabei vorteilhafterweise in weiten Grenzen ein erwünschter spezifischer elektrischer Widerstand der Haftvermittlerschicht 3 eingestellt werden, wodurch der Drahtlack seinen Charakter als Isolierlack verliert. Zur Erzeugung einer Schweißbarkeit kann der Graphitanteil dabei bis zu 40 Masseteile auf 100 Masseteile Drahtlack betragen, wobei nach Überschreiten eines oberen Grenzwertes die Leitfähigkeit nicht mehr zunimmt. Als optimal wird unter diesem Gesichtspunkt ein Graphitgehalt von 10 bis 30 Masseteilen auf 100 Masseteile Drahtlack angesehen.

Die Schichtdicke D der Haftvermittlerschicht 3 kann dabei mit Vorteil im Bereich von 3 bis 20 µm, insbesondere im Bereich von 8 bis 15 µm, liegen. Dies gilt auch unabhängig von dem speziellen Drahtlack als Haftvermittler. Die Teilchengröße von eventuell vorhandenen Graphitpartikeln sollte in jedem Fall kleiner sein als diese Schichtdicke D der Haftvermittlerschicht 3.

In der in Fig. 6 und 7 dargestellten Ausführung ist der thermoplastische Werkstoff 2 - im Gegensatz zu den Ausführungen in Fig. 2, 3 und 5 - unter Zwischenlage der Haftvermittlerschicht 3 beidseitig mit der Metallschicht 1 verbunden.

Im oberen Teil der Fig. 6 ist die Haftvermittlerschicht 3 als Einzelschicht ausgebildet, während sie im unteren Teil als Doppelschicht ausgebildet ist und eine unmittelbar auf der Metallschicht 1 liegende Primerschicht 3a und eine auf der Primerschicht 3a liegende Coverschicht 3b umfasst. Diese Schichten 3a, 3b entsprechen den Schichten 16b und 16a in Fig. 2 und 3. Die zeichnerische Darstellung mit unmittelbar übereinander liegenden aus dem thermoplastischen Werkstoff 2 bestehenden Kunststoffkomponenten ist dabei als idealisiert zu betrachten, weil entsprechend dem erfindungsgemäß vorgesehenen Wärmeeintrag über die Metallkomponente 12 bei einer beidseitigen Verbindung von Metallkomponente 12 mit Kunststoffkomponenten 14 ein geeigneter Versatz vorgesehen werden sollte.

In den beiden Teilschichten 3a, 3b für den Drahtlack kann bevorzugt eine unterschiedliche Zusammensetzung vorliegen, so dass die Coverschicht 3b geringerer Reaktivität und Bindungsfähigkeit bei Raumtemperatur eine Schutzschicht gegen schädliche Umwelteinflüsse bildet, wenn der Verbund aus Metallschicht 1 und thermoplastischem Werkstoff 2 als Halbzeug trans-portiert, gelagert oder vertrieben werden soll. In diesem Zustand kann vorteilhafterweise das Halbzeug, insbesondere unter Einsatz eines elektrischen Widerstandsschweißverfahrens, auch schweißfähig sein.

Der Drahtlack für die unmittelbar auf der Metallschicht 1 liegende Primerschicht 3a kann vorzugsweise aus einer Zusammensetzung mit höherem Feststoffgehalt als dem der darüber liegende Coverschicht 3b gebildet sein und beispielsweise einen Feststoffgehalt von 30 bis 45 Prozent, vorzugsweise von etwa 32 bis 38 Prozent, aufweisen, wie dies bei dem Drahtlack 1832 der Firma Wiedeking GmbH der Fall ist, der ein Polyamid-Imid-Copolymer enthält. Ein solcher Lack weist bei 23 °C eine im Haake-Viskosimeter ermittelte Viskosität von 1750 ± 250 mPas auf.

Die auf der Primerschicht 3a liegende Coverschicht 3b kann bevorzugt aus den oben in Verbindung mit der Einzelschicht genannten Lacken, insbesondere dem Lack 1251 der Firma Wiedeking GmbH, bestehen. Ein solcher Lack kann in Anpassung an das vorgesehene Auftragungsverfahren in unter-schiedlichen Formen zum Einsatz kommen, beispielsweise bei einem Feststoffgehalt von 16 ± 1 Prozent mit einer bei 23 °C ermittelten Viskosität von 900 ± 100 mPas oder bei einem Feststoffgehalt von 18 ± 1 Prozent mit einer Viskosität von 1300 ± 200 mPas.

Bei einer Ausbildung der Haftvermittlerschicht 3 als Doppelschicht kann die Dicke Da der Primerschicht 3a mit Vorteil im Bereich von 2 bis 10 µm, vorzugsweise im Bereich von 4 bis 8 µm, liegen, während für die Dicke Db der Coverschicht 3b ein Bereich von 4 bis 20 µm, vorzugsweise im Bereich von 6 bis 15 µm, als optimal anzusehen ist. Damit ergibt sich für die Gesamtdicke D der Haftvermittlerschicht 3 ein Bereich von etwa 6 bis 30 µm, bevorzugt von 10 bis 23 µm.

Die über die Haftvermittlerschicht 3 hergestellte Bindung zwischen der Metallschicht 1 und dem thermoplastischen Werkstoff 2 entsteht durch eine thermische Behandlung, insbesondere bei einer Temperatur oberhalb des Erweichungspunktes des als thermoplastischer Werkstoff 2 eingesetzten Polyamids. So kann die Temperatur der Herstellung der Bindung, die erfindungsgemäß durch einen Wärmeeintrag über die Metallkomponente 12 erzeugt wird, Maximalwerte bis zu 260 °C annehmen. Da die Bindung bei derartig gegenüber der Raumtemperatur hohen Temperaturen entsteht, liegt auch die thermische Beständigkeit des erfindungsgemäßen Verbundkörpers vorteilhafterweise entsprechend hoch.

Unter dem Gesichtspunkt eines sich beim Endprodukt nach der Herstellung einstellenden optimalen Eigenschaftsbildes des erfindungsgemäßen Verbundkörpers 10 hat sich auch gezeigt, dass in der Haftvermittlerschicht 3 insbesondere der Einsatz von derartigen Lacken von Vorteil ist, bei denen das im Lack enthaltene Polymer einen hohen Schmelzpunkt hat, d. h. einen Schmelzpunkt, der sich von seiner Zersetzungstemperatur nur wenig unterscheidet. Im Zusammenhang damit ist die Ermittlung einer sogenannten Wiedererweichungstemperatur zu nennen, wonach die fertige Haftvermittlerschicht 3 jeweils eine bestimmte Zeit lang bestimmten Temperaturen ausgesetzt wird, und dann die Temperatur ermittelt wird, bei der unter den gegebenen Bedingungen eine Wiedererweichung des Haftvermittlers erfolgt. Diese Temperatur kann bei einer Expositionsdauer von 30 Minuten mit Vorteil beispielsweise bei etwa 180 °C liegen.

Die in Fig. 7 dargestellte, auf der Basis eines lichtmikroskopischen Schliffbilds gewonnene Darstellung eines erfindungsgemäßen Verbundkörpers 10 zeigt den - beispielsweise im oberen Teil von Fig. 6 vorliegenden - charakteristisdhen Aufbau aus der Metallschicht 1, dem Polyamid als thermoplastischem Werkstoff und der Haftvermittlerschicht 3. Des Weiteren ist eine Schutzschicht 4 erkennbar, die bevorzugt aus einem Schmelztauchüberzug gebildet sein kann. Bei der Schutzschicht 4 kann es sich z. B. um eine durch Feuerverzinken aufgebrachte Schicht handeln, wobei ein Feinblech durch ein schmelzflüssiges Zinkbad geführt und die gewünschte Zinkauflage nach einem Düsenabstreifverfahren eingestellt und geregelt werden kann.

Die Schutzschicht 4 kann mit Vorteil auch eine feueraluminierte Schicht sein, die dadurch entsteht, dass ein, vorzugsweise kaltgewalztes, Stahlband mit einem Aluminium-Silizium-Überzug versehen wird. Ein solcher Überzug besteht aus einer Aluminium-Legierung mit etwa 8 bis 10 % Silizium. Durch eine derartige Beschichtung weist das Material eine ausgezeichnete Hitzebeständigkeit auf und besitzt eine hohe Wärmerückstrahlfähigkeit.

Mit dem Vorhandensein der beschriebenen Schutzschichten 4 ist des Wieteren der Vorteil verbunden, dass der metallische Charakter, der mit der Haftvermittlerschicht 3 zu bedeckenden Oberfläche nicht verloren geht.

Fig. 7 veranschaulicht auch, dass die Anbindung des Polyamids über die Haftvermittlerschicht 3 an die Metallschicht 2 durch Wärmeeinwirkung erfolgt ist, insbesondere bei einer Temperatur oberhalb des Erweichungspunktes des mit dem Metall verbundenen Polyamids. Dies wird dadurch deutlich, dass in einer Grenzschicht G zwischen der Haftvermittlerschicht 3 und dem Polyamidwerkstoff miteinander verschmolzene Übergangszonen und im Polyamidwerkstoff selbst - bei der Abkühlung entstandene - Bereiche 2b aus amorpher Polyamidphase ausgebildet sind, die sich im lichtmikroskopischen Bild deutlich von der darüber liegenden kristallinen Polyamidstruktur 2a unterscheiden lassen.

Die Erfindung ist nicht auf die dargestellte Ausführung, die dem Wesen nach ein Post-Moulding-Assembly-Verfahren unter Verwendung eines Haftver-mittlers darstellt, und auf die in den unabhängigen Ansprüchen definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der genannten Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

Ein erfindungsgemäßer Verbundkörper kann nicht nur als Strukturteil eines Kraftfahrzeugs, sondern auch als Konstruktionselement für Maschinen und Bauteile aller Art, für elektronische oder Haushaltsartikel oder Möbel eingesetzt werden.

Sofern andere Werkstoffe als Metall, z. B. eine Keramik, ein Eigenschaftsbild, wie eine ähnliche Wärmeleitfähigkeit und Bindungsfähigkeit an einen geeigneten thermoplastisch erweichbaren Haftvermittler wie ein Metall, aufweisen, werden Bauteile aus diesen Werkstoffen im Sinne der vorstehenden Beschreibung und Ansprüche ebenfalls unter dem Begriff Metallkomponente subsumiert.

Eine besonders für aus Polypropylen bestehende Kunststoffkomponenten 14 als Haftvermittler geeignete Kunstharz-Kombination kann mit Vorteil aus Butanol, insbesondere mit einem Anteil von 1 bis 2,5 Masseprozent an der Gesamtmenge, Trimethylcyclohexenon, insbesondere 3,5,5-Trimethylcyclo-hex-2-enon mit einem Anteil von 20 bis 25 Masseprozent an der Gesamtmenge, einem Propylenglykolmonomethylether, wie 1-Methoxy-2-propanol, insbesondere mit einem Anteil von 25 bis 50 Masseprozent an der Gesamtmenge, leichten, d. h. niedrigsiedenden, mit Wasserstoff behandelten Erdölfraktionen, insbesondere mit einem Anteil von 0,5 bis 1 Masseprozent an der Gesamtmenge sowie aus Alkanen, insbesondere mit einem Anteil von 7,5 bis 15 Masseprozent an der Gesamtmenge, bestehen. Bei den Alkanen kann es sich insbesondere um ein Gemisch von solchen mit einer Kettenlänge von 11 bis 15 Kohlenstoffatomen, insbesondere mit einem Anteil von 2,5 bis 5 Masseprozent an der Gesamtmenge, und von solchen mit einer Kettenlänge von 16 bis 20 Kohlenstoffatomen, insbesondere mit einem Anteil von 5 bis 10 Masseprozent an der Gesamtmenge, handeln. Eine derartige Kunstharz-Kombination kann mit Vorteil einen Lösemittelgehalt von 60 bis 66 Prozent, vorzugsweise 63 Prozent, und insbesondere bei 20 °C eine Dichte von 0,95 g/cm³ aufweisen, wobei eine nach DIN 53211 bestimmte Viskosität bei 20 °C Werte von > 30 s 4 mm liefert.

Eine besonders für aus Acrylnitril-Butadien-Styrol bestehende Kunststoff-komponenten 14 als Haftvermittler geeignete Kunstharz-Kombination kann mit Vorteil aus Bisphenol-A-Epichlorhydrinharzen mit einer durchschnittlichen molaren Masse von nicht mehr als 700 g/mol, insbesondere mit einem Anteil von 1 bis 2,5 Masseprozent an der Gesamtmenge, n-Butylacetat, insbesondere mit einem Anteil von 50 bis 100 Masseprozent an der Gesamtmenge, und schweren, d. h. höhersiedenden, aromatischen Erdölfraktionen, insbesondere mit einem Anteil von bis zu 0,5 an der Gesamtmenge, bestehen. Eine derartige Kunstharz-Kombination kann mit Vorteil einen Lösemittelgehalt von 75 bis 81 Prozent, vorzugsweise 78 Prozent, und insbesondere bei 20 °C eine Dichte von 0,95 g/cm³ aufweisen, wobei eine nach DIN 53211 bestimmte Viskosität bei 20 °C Werte von > 70 s 4 mm liefert.

Wie ein Drahtlack können die vorgenannten Kunstharz-Kombinationen vorteilhafterweise im Coil-Coating-Verfahren aufgetragen und danach im Trockner behandelt werden, wobei sie eine den Anforderungen des erfindungs-gemäßen Verfahrens in exzellenter Weise angepasste Qualität aufweisen.

### Bezugszeichen

- 1: Metallschicht
- 2: thermoplastischer Werkstoff, Polyamid
- 2a: kristalliner Bereich von 2
- 2b: amorpher Bereich von 2
- 3: Haftvermittlerschicht
- 3a: Primerschicht von 3
- 3b: Coverschicht von 3
- 4: Schutzschicht auf 1

- 10: Metall-Kunststoff-Verbundkörper, Hybrid-Bauteil
- 12: Metallkomponente von 10
- 14: Kunststoffkomponente von 10
- 16: Haftvermittler zwischen 12 und 14
- 16a: Coverschicht von 16 (entspricht 3b)
- 16b: Primerschicht von 16 (entspricht 3a)
- 18, 20: Karosserieseitenteile
- 22: Heizelement
- 24: Matrix, Stempel
- 26: Fügestelle von 12/16 und 14
- 28: Auswölbung von 14
- 30: gestauchter Bereich von 14
- 32: Anfasung von 14
- 34: Spitzenbereich von 14
- 36: Querschnittsverjüngung im Bereich von 34

- A: Adhäsive Verbindung
- D: Dicke von 3
- Da: Dicke von 3a
- Db: Dicke von 3b
- F: Anpresskraft
- G: Grenzschicht zwischen 2 und 3
- GT: Bereich von 14 mit Temperatur im Bereich der Glastemperatur
- RT: Bereich von 14 mit Raumtemperatur
- S: Materialdicke von 14
- ST: Bereich von 14 mit Temperatur im Bereich der Schmelztemperatur

## Patentansprüche

1. Verfahren zur Herstellung eines aus einer Kunststoffkomponente (14) und aus einer Metallkomponente (12) bestehenden Hybrid-Bauteiles (10), wobei aus der Kunststoffkomponente (14) und aus der Metallkomponente (12) mittels eines zwischen der Kunststoffkomponente (14) und der Metallkomponente (12) angeordneten Haftvermittlers (16) durch Fügen unter Wärmeeinwirkung und Druck ein stoffschlüssiger Verbund hergestellt wird, wobei über die Metallkomponente (12) eine Wärmeeintragung erfolgt, und wobei die Metallkomponente (12) ein Blechbauteil ist, welches vor und beim Fügen in oder an einer beheizten Matrix oder einem Stempel (24) aufgenommen oder gelagert ist,
**dadurch gekennzeichnet, dass** die Kunststoffkomponente (14) ein Bauteil ist, das einen zur Verbindung mit der Metallkomponente (12) bestimmten Spitzenbereich (34) aufweist, der nach einer Erwärmung der Metallkomponente (12) und des Haftvermittlers (16) auf die mit dem Haftver-mittler (16) bedeckte Metallkomponente (12) aufgestaucht wird, wobei ein in der Matrix oder dem Stempel (24) angeordnetes Heizelement (22) die zum Fügen notwendige Wärme erzeugt, welche über den Haftvermittler (16) an die Kunststoffkomponente (14) weitergeleitet wird, so dass sich in einer Grenzfläche zwischen dem Haftvermittler (16) und der Kunststoffkomponente (14) mindestens die Temperatur der Erweichung der Kunststoffkomponente (14) einstellt, wobei der Haftvermittler (16) eine ausreichende thermische Aktivierung zu einer Reaktion mit der Kunststoffkomponente (14) erfährt, jedoch unter der Wärmeeinwirkung nicht zerfließt, und wobei ein Anpressdruck und die Temperatur derart eingestellt werden, dass sich eine orthogonal zur Ober-fläche der Metallkomponente (12) verlaufende Länge der Kunststoffkomponente (14) unter Bildung eines gestauchten Bereiches (30) und des stoffschlüssigen Verbunds zwischen der Kunststoffkomponente (14) und dem Haftvermittler (16) verkürzt.

2. Verfahren nach Anspruch 1,
**dadurch gekennzeichnet, dass** der Haftvermittler (16) heißsiegelfähig ist.

3. Verfahren nach Anspruch 1 oder 2,
**dadurch gekennzeichnet, dass** der Haftvermittler (16) vor dem Fügen der Kunststoffkomponente (14) und der Metallkomponente (12) als Haftvermittlerschicht (3) auf die Metallkomponente (12) aufgebracht und so stark vernetzt wird, dass ein dadurch entstehender Trockenfilm hart, aber elastisch ist und fest auf der Metallkomponente (12) haftet.

4. Verfahren nach einem der Ansprüche 1 bis 3,
**dadurch gekennzeichnet, dass** der Haftvermittler (16), insbesondere in einem Coil-Coating-Verfahren, durch Aufsprühen, Gießen, Düsen- oder Walzenauftrag auf die Metallkomponente (12) oder Tauchen der Metallkomponente (12) aufgebracht wird.

5. Verfahren nach einem der Ansprüche 1 bis 4,
**dadurch gekennzeichnet, dass** der Haftvermittler (16) durch Wärmebehandlung an die Metallkomponente (12) gebunden wird.

6. Verfahren nach einem der Ansprüche 1 bis 5,
**dadurch gekennzeichnet, dass** das Heizelement (22), durch welches die zum Fügen notwendige Wärme erzeugt wird, eine Induktionsschleife ist.

7. Verfahren nach einem der Ansprüche 1 bis 6,
**dadurch gekennzeichnet, dass** als thermoplastischer Werkstoff (2) der Kunststoffkomponente (14) Polyamid und als Haftvermittler (16) ein aus einem amidhaltigen Drahtlack gebildeter Werkstoff eingesetzt wird.

8. Verfahren nach Anspruch 7,
**dadurch gekennzeichnet, dass** die Wärmebehandlung bei Temperaturen oberhalb des Erweichungspunktes von Polyamid, vorzugsweise in einem Temperaturbereich bis 260 °C, erfolgt.

9. Verfahren nach einem der Ansprüche 1 bis 8,
**dadurch gekennzeichnet, dass** der Haftvermittler (16) vor dem Fügen als Haftvermittlerschicht (3) ausgebildet wird, die eine aus einer unmittelbar auf dem Metall der Metallkomponente (12) aufliegenden Primerschicht (3a) und aus einer darüber liegenden Coverschicht (3b) bestehende Doppelschicht ist.

10. Verfahren nach einem der Ansprüche 1 bis 9,
**dadurch gekennzeichnet, dass** ein zur Bildung einer Schicht (3) des Haftvermittlers (16) eingesetzter Lack, insbesondere der Drahtlack, einen Feststoffanteil von 8 bis 25 Masseprozent, vorzugsweise von 10 bis 16 Masseprozent, enthält.

11. Verfahren nach einem der Ansprüche 1 bis 10,
**dadurch gekennzeichnet, dass** ein zur Bildung einer Schicht (3) des Haftvermittlers (16) eingesetzter Lack, insbesondere der Drahtlack, als Lösungsmittel leichte aromatische Erdölfraktionen, Phenol, Kresol, Xylol, Benzylakohol, N-Methyl-2-pyrrolidon und/oder N,N-Dimethylacetamid enthält.

12. Verfahren nach einem der Ansprüche 1 bis 9,
**dadurch gekennzeichnet, dass** eine zur Bildung einer Schicht (3) des Haftvermittlers (16), insbesondere zur Verbindung mit einer aus Polypropylen bestehenden Kunststoffkomponente (14), verwendete Kunstharz-Kombination aus Butanol, insbesondere mit einem Anteil von 1 bis 2,5 Ma.-% an der Gesamtmenge, Trimethylcyclohexenon, insbesondere mit einem Anteil von 20 bis 25 Ma.-% an der Gesamtmenge, einem Propylenglykolmonomethylether, insbesondere mit einem Anteil von 25 bis 50 Ma.-% an der Gesamtmenge, niedrigsiedenden, mit Wasserstoff behandelten Erdölfraktionen, insbesondere mit einem Anteil von 0,5 bis 1 Ma.-% der Gesamtmenge sowie aus Alkanen, insbesondere mit einem Anteil von 7,5 bis 15 Ma.-% der Gesamtmenge, besteht.

13. Verfahren nach Anspruch 12,
**dadurch gekennzeichnet**, dassdieAlkaneeinGemischvon solchen mit einer Kettenlänge von 11 bis 15 Kohlenstoffatomen, insbesondere mit einem Anteil von 2,5 bis 5 Ma.-% an der Gesamtmenge, und von solchen mit einer Kettenlänge von 16 bis 20 Kohlenstoffatomen, insbesondere mit einem Anteil von 5 bis 10 Ma.-% sind.

14. Verfahren nach einem der Ansprüche 1 bis 9,
**dadurch gekennzeichnet, dass** eine zur Bildung einer Schicht (3) des Haftvermittlers (16), insbesondere zur Verbindung mit einer aus Acrylnitril-Butadien-Styrol bestehenden Kunststoffkomponente (14), verwendete Kunstharz-Kombination aus Bisphenol-A-Epichlorhydrinharzen mit einer durchschnittlichen molaren Masse von nicht mehr als 700 g/mol, insbesondere mit einem Anteil von 1 bis 2,5 Ma.-% an der Gesamtmenge, n-Butylacetat, insbesondere mit einem Anteil von etwa 50 bis 100 Ma.-% an der Gesamtmenge, und schweren, d. h. höhersiedenden, aromatischen Erdölfraktionen, insbesondere mit einem Anteil von bis zu 0,5 Ma.-% an der Gesamtmenge, besteht.

15. Metall-Kunststoff-Verbundkörper (10), bestehend aus einer Metallkomponente (12) und aus einer aus einem thermoplastischen Kunststoff (2) bestehenden Komponente (14) sowie aus einer zwischen den Komponenten (12,14) angeordneten aus einem Haftvermittler (16) bestehenden Haftvermittlerschicht (3), insbesondere hergestellt nach einem Verfahren gemäß einem der Ansprüche 1 bis 14,
**dadurch gekennzeichnet, dass** die thermoplastische Kunststoffkomponente (14) im Bereich einer Fügestelle (26) an den Haftvermittler (16) einen gestauchten Bereich (30) aufweist.

16. Verbundkörper (10) nach Anspruch 15,
**dadurch gekennzeichnet, dass** die thermoplastische Kunststoffkomponente (14) im gestauchten Bereich (30) eine Aufwölbung (28) aufweist.

17. Verbundkörper (10) nach Anspruch 16,
**dadurch gekennzeichnet, dass** die Metallkomponente (12) ein Blech, insbesondere ein Stahlblech, und die Kunststoffkomponente (14) eine Rippenstruktur ist, die vorzugsweise ein Rahmenteil bilden.

18. Verbundkörper (10) nach Anspruch 16 oder 17,
**dadurch gekennzeichnet, dass** die Zugfestigkeit der Verbindung zwischen der Kunststoffkomponente (14) und der Metallkomponente (12) im Bereich von etwa 8,5 ± 2,0 kN / cm² liegt.

19. Verbundkörper (10) nach einem der Ansprüche 16 bis 18,
**dadurch gekennzeichnet, dass** die Kunststoffkomponente (14) aus Polyamid, Polypropylen oder Acrylnitril-Butadien-Styrol als thermoplastischem Werkstoff (2) besteht.

20. Verbundkörper (10) nach einem der Ansprüche 16 bis 19,
**dadurch gekennzeichnet,** dassderHaftvermittler(16)aus einem Drahtlack, insbesondere einem amidhaltigen Drahtlack, gebildet ist.

21. Verbundkörper (10) nach einem der Ansprüche 16 bis 19,
**dadurch gekennzeichnet, dass** der Haftvermittler (16) aus einer Kunstharz-Kombination besteht, die überwiegend Butylacetat oder ein Gemisch aus einem Propylenglykolalkylester und einer alkylierten Cyclohexenonverbindung enthält.

22. Verbundkörper (10) nach einem der Ansprüche 16 bis 21,
**dadurch gekennzeichnet, dass** in einer Grenzschicht (G) zwischen der Haftvermittlerschicht (3) und dem thermoplastischen Werkstoff (2) miteinander verschmolzene Übergangszonen und/oder im thermoplastischen Werkstoff (2) Bereiche (2b) mit amorpher Polymerphase ausgebildet sind.

23. Verbundkörper (10) nach einem der Ansprüche 16 bis 22,
**dadurch gekennzeichnet, dass** der Haftvermittler (16) zur Erzeugung einer elektrischen Leitfähigkeit und Schweißbarkeit sowie der Ermöglichung einer Beschichtung durch kathodische Tauchlackierung Graphit enthält.

24. Verbundkörper (10) nach einem der Ansprüche 16 bis 23,
**dadurch gekennzeichnet, dass** die Metallkomponente (12) aus kaltgewalztem Bandstahl, vorzugsweise in den Qualitäten DC 01 bis DC 04 nach DIN EN 10 139, aus Fein- oder Feinstblech oder aus einem Edelstahl-, Aluminium- oder Buntmetallband (1) besteht.

25. Verbundkörper (10) nach einem der Ansprüche 16 bis 24,
**dadurch gekennzeichnet, dass** die Haftvermittlerschicht (3) eine aus einer unmittelbar auf der Metallschicht (1) aufliegenden Primerschicht (3a) und aus einer darüber liegenden Coverschicht (3b) bestehende Doppelschicht ist.

26. Verbundkörper (10) nach einem der Ansprüche 16 bis 25,
**dadurch gekennzeichnet, dass** eine Dicke (D) der als Einzel- oder Doppelschicht ausgebildeten Haftvermittlerschicht (3) im Bereich von 3 bis 30 µm, insbesondere im Bereich von 6 bis 23 µm, bevorzugt im Bereich von 10 bis 15 µm, liegt.

27. Verbundkörper (10) nach einem der Ansprüche 16 bis 26,
**dadurch gekennzeichnet, dass** unter der Haftvermittlerschicht (3) auf die Metallschicht (1) eine Passivierungs- und/oder Schutzschicht (4) aufgebracht ist.

28. Verwendung einer thermoplastischen Kunststoffkomponente (14), für ein Verfahren nach einem der Ansprüche 1 bis 15 oder zur Herstellung eines Verbundkörpers (10) nach einem der Ansprüche 16 bis 27.

29. Verwendung nach Anspruch 28,
**dadurch gekennzeichnet, dass** die Kunststoffkomponente (14) aus einem amorphen oder teilkristallinen, unverstärkten, verstärkten oder gefüllten Kunststoff, wie einem Polyamid, einem Polyester, einem Polyolefin, Polystyrol, einem Styrolacrylnitrilcopolymer, einem Acrylnitril-Butadien-StyrolCopolymer, einem Polycarbonat, einem Polypropylenoxid, einem Polyphenylensulfid, einem Polyimid, einem Polyketon, oder aus einem Blend aus diesen Werkstoffen besteht.

30. Verwendung nach Anspruch 28 oder 29,
**dadurch gekennzeichnet, dass** die Kunststoffkomponente (14) in einem zur Verbindung mit einer Metallkomponente bestimmten Spitzenbereich (34), z. B. durch eine Anfasung (32) eine Querschnittsverjüngung (36) aufweist, die im Extremfall eine nur linien- oder punktförmige Ausbildung besitzt.

## Claims

1. A method for producing a hybrid part (10) consisting of a plastic component (14) and a metal component (12), wherein by means of an adhesion promoter (16) arranged between the plastic component (14) and the metal component (12) a material bond is produced from the plastic component (14) and from the metal component (12) by joining under the action of heat and pressure, wherein heat is introduced via the metal component (12) and wherein the metal component (12) is a sheet metal part, which is accommodated or supported in or on a heated matrix or die (24) before and during the joining, **characterised in that** the plastic component (14) is a part that has a tip area (34) intended for connecting with the metal component (12), which tip area, after the heating of the metal component (12) and the adhesion promoter (16), is compressed on to the metal component (12) covered with the adhesion promoter (16), wherein a heating element (22) arranged in the matrix or die (24) generates the heat necessary for the joining, which heat is transferred to the plastic component (14) via the adhesion promoter (16) so that in a boundary layer between the adhesion promoter (16) and the plastic component (14) at least the temperature at which the plastic component (14) softens is reached, wherein the adhesion promoter (16) undergoes sufficient thermal activation for reaction with the plastic component (14) but does not flow under the action of the heat and wherein a contact pressure and the temperature are adjusted such that a length of the plastic component (14) running orthogonally to the surface of the metal component (12) is shortened with the formation of a compressed region (30) and of the material bond between the plastic component (14) and the adhesion promoter (16).

2. The method according to claim 1,
**characterised in that** the adhesion promoter (16) is heat-sealable.

3. The method according to claim 1 or 2,
**characterised in that** the adhesion promoter (16) is applied on to the metal component (12) as an adhesion promoter layer (3) before the plastic component (14) and the metal component (12) are joined, and is crosslinked sufficiently strongly that a resulting dry film is hard but elastic and adheres firmly to the metal component (12).

4. The method according to one of claims 1 to 3,
**characterised in that** the adhesion promoter (16) is applied in particular in a coil-coating process, by spraying, casting, nozzle or roller application on to the metal component (12) or by dipping of the metal component (12).

5. The method according to one of claims 1 to 4,
**characterised in that** the adhesion promoter (16) is bonded to the metal component (12) by heat treatment.

6. The method according to one of claims 1 to 5,
**characterised in that** the heating element (22) by means of which the heat needed for the joining is generated is an induction loop.

7. The method according to one of claims 1 to 6,
**characterised in that** as thermoplastic material (2) of the plastic component (14) polyamide is employed and as adhesion promoter (16) a material made of an amide-containing wire enamel is employed.

8. The method according to claim 7,
**characterised in that** the heat treatment takes place at temperatures above the softening point of polyamide, preferably in a temperature range of up to 260°C.

9. The method according to one of claims 1 to 8,
**characterised in that**, before the joining, the adhesion promoter (16) is configured as an adhesion promoter layer (3) which is a double layer consisting of a primer layer (3a) lying directly on the metal of the metal component (12) and of a cover layer (3b) lying thereon.

10. The method according to one of claims 1 to 9,
**characterised in that** a coating used to form a layer (3) of the adhesion promoter (16), in particular the wire enamel, has a solids content of 8 to 25% by mass, preferably of 10 to 16% by mass.

11. The method according to one of claims 1 to 10,
**characterised in that** a coating used to form a layer (3) of the adhesion promoter (16), in particular the wire enamel, contains light aromatic petroleum fractions, phenol, cresol, xylene, benzyl alcohol, N-methyl-2-pyrrolidone and/or N,N-dimethylacetamide as solvent.

12. The method according to one of claims 1 to 9,
**characterised in that** a synthetic resin combination used to form a layer (3) of the adhesion promoter (16), in particular for bonding with a plastic component (14) consisting of polypropylene, consists of butanol, in particular in a proportion of 1 to 2.5 mass % of the total quantity, trimethyl cyclohexenone, in particular in a proportion of 20 to 25 mass % of the total quantity, a propylene glycol monomethyl ether, in particular in a proportion of 25 to 50 mass % of the total quantity, low-boiling petroleum fractions treated with hydrogen, in particular in a proportion of 0.5 to 1 mass % of the total quantity, and of alkanes, in particular in a proportion of 7.5 to 15 mass % of the total quantity.

13. The method according to claim 12,
**characterised in that** the alkanes are a mixture of those having a chain length of 11 to 15 carbon atoms, in particular in a proportion of 2.5 to 5 mass % of the total quantity, and of those having a chain length of 16 to 20 carbon atoms, in particular in a proportion of 5 to 10 mass %.

14. The method according to one of claims 1 to 9,
**characterised in that** a synthetic resin combination used to form a layer (3) of the adhesion promoter (16), in particular for bonding with a plastic component (14) consisting of acrylonitrile-butadiene-styrene, consists of bisphenol A-epichlorohydrin resins having an average molar mass of no more than 700 g/mol, in particular in a proportion of 1 to 2.5 mass % of the total quantity, n-butyl acetate, in particular in a proportion of approximately 50 to 100 mass % of the total quantity, and heavy, i.e. higher-boiling, aromatic petroleum fractions, in particular in a proportion of up to 0.5 mass % of the total quantity.

15. A metal-plastic composite (10) consisting of a metal component (12) and of a component (14), which consists of a thermoplastic (2), and of an adhesion promoter layer (3), which consists of an adhesion promoter (16) arranged between the components (12, 14), in particular produced by a method according to one of claims 1 to 14, **characterised in that** the thermoplastic component (14) has a compressed region (30) in the region of a joining point (26) to the adhesion promoter (16).

16. A composite (10) according to claim 15,
**characterised in that** the thermoplastic component (14) exhibits a bulging (28) in the compressed region (30).

17. The composite (10) according to claim 16,
**characterised in that** the metal component (12) is a metal sheet, in particular a steel sheet, and the plastic component (14) is a rib structure, which preferably form a frame section.

18. The composite (10) according to claim 16 or 17,
**characterised in that** the tensile strength of the bond between the plastic component (14) and the metal component (12) is in the range of approximately 8.5 ± 2.0 kN/cm².

19. The composite (10) according to one of claims 16 to 18,
**characterised in that** the plastic component (14) consists of polyamide, polypropylene or acrylonitrile-butadiene-styrene as the thermoplastic material (2).

20. The composite (10) according to one of claims 16 to 19,
**characterised in that** the adhesion promoter (16) is made of a wire enamel, in particular an amide-containing wire enamel.

21. The composite (10) according to one of claims 16 to 19,
**characterised in that** the adhesion promoter (16) consists of a synthetic resin combination which predominantly contains butyl acetate or a mixture of a propylene glycol alkyl ester and an alkylated cyclohexenone compound.

22. The composite (10) according to one of claims 16 to 21,
**characterised in that** in a boundary layer (G) between the adhesion promoter layer (3) and the thermoplastic material (2) transition zones that have fused together and/or in the thermoplastic material (2) regions (2b) having an amorphous polymer phase are formed.

23. The composite (10) according to one of claims 16 to 22,
**characterised in that** the adhesion promoter (16) contains graphite to create electrical conductivity and weldability and to allow coating by cathodic electrodeposition.

24. The composite (10) according to one of claims 16 to 23,
**characterised in that** the metal component (12) consists of cold-rolled steel strip, preferably in the grades DC 01 to DC 04 according to DIN EN 10139, of thin steel sheet or blackplate or of a stainless steel, aluminium or non-ferrous metal strip (1).

25. The composite (10) according to one of claims 16 to 24,
**characterised in that** the adhesion promoter layer (3) is a double layer consisting of a primer layer (3a) lying directly on the metal layer (1) and of a cover layer (3b) lying thereon.

26. The composite (10) according to one of claims 16 to 25,
**characterised in that** a thickness (D) of the adhesion promoter layer (3) configured as a single or double layer is in the range of 3 to 30 µm, in particular in the range of 6 to 23 µm, preferably in the range of 10 to 15 µm.

27. The composite (10) according to one of claims 16 to 26,
**characterised in that** beneath the adhesion promoter layer (3) a passivating and/or protective layer (4) is applied on to the metal layer (1).

28. Use of a thermoplastic component (14) for a method according to one of claims 1 to 15 or for the production of a composite (10) according to one of claims 16 to 27.

29. The use according to claim 28,
**characterised in that** the plastic component (14) consists of an amorphous or partially crystalline, unreinforced, reinforced or filled plastic, such as a polyamide, a polyester, a polyolefin, polystyrene, a styrene-acrylonitrile copolymer, an acrylonitrile-butadiene-styrene copolymer, a polycarbonate, a polypropylene oxide, a polyphenylene sulfide, a polyimide, a polyketone or of a blend of these materials.

30. The use according to claim 28 or 29,
**characterised in that** the plastic component (14) exhibits, in a tip area (34) intended for connection with a metal component, a cross-sectional tapering (36), e.g. by means of a chamfer (32), which in an extreme case possesses only a linear or punctiform configuration.

## Revendications

1. Procédé servant à fabriquer un composant hybride (10) constitué d'un composant en plastique (14) et d'un composant métallique (12), dans lequel un composite par liaison de matière est fabriqué à partir du composant en plastique (14) et du composant métallique (12) au moyen d'un promoteur d'adhérence (16) disposé entre le composant en plastique (14) et le composant métallique (12), par assemblage sous l'effet de la chaleur et pression, dans lequel un apport de chaleur est effectué par l'intermédiaire du composant métallique (12), et dans lequel le composant métallique (12) est un composant en tôle qui est logé ou installé, avant et au cours de l'assemblage, dans ou au niveau d'une matrice chauffée ou dans ou au niveau d'un poinçon (24),
**caractérisé en ce que** le composant en plastique (14) est un élément, qui comporte une zone de pointe (34) destinée à être reliée au composant métallique (12) qui est refoulée après le chauffage du composant métallique (12) et du promoteur d'adhérence (16) sur le composant métallique (12) recouvert du promoteur d'adhérence (16), dans lequel l'élément de chauffage (22) disposé dans la matrice ou le poinçon (24) produisant la chaleur nécessaire à l'assemblage, laquelle est acheminée au composant en plastique (14) par l'intermédiaire du promoteur d'adhérence (16) de sorte qu'au moins la température du ramollissement du composant en plastique (14) se règle dans une face limite entre le promoteur d'adhérence (16) et le composant en plastique (14), dans lequel le promoteur d'adhérence (16) subissant une activation thermique suffisante aux fins d'une réaction avec le composant en plastique (14) sans toutefois se liquéfier sous l'effet de la chaleur, et dans lequel une pression de compression et la température pouvant être réglées de manière à raccourcir une longueur, s'étendant de manière orthogonale par rapport à la surface du composant métallique (12), du composant en plastique (14) tout en formant une zone (30) refoulée et le composite par liaison de matière entre le composant en plastique (14) et le promoteur d'adhérence (16).

2. Procédé selon la revendication 1,
**caractérisé en ce que** le promoteur d'adhérence (16) est thermosoudable.

3. Procédé selon la revendication 1 ou 2,
**caractérisé en ce que** le promoteur d'adhérence (16) est appliqué, avant l'assemblage du composant en plastique (14) et du composant métallique (12), sous la forme d'une couche de promoteur d'adhérence (3), sur le composant métallique (12) et est si fortement réticulé qu'un film sec en résultant est dur et élastique à la fois et adhère de manière solidaire au composant métallique (12).

4. Procédé selon l'une quelconque des revendications 1 à 3,
**caractérisé en ce que** le promoteur d'adhérence (16) est appliqué, en particulier lors d'un procédé d'enduction en continu, par pulvérisation, par coulée, par une application par des buses ou au rouleau sur le composant métallique (12) ou par immersion du composant métallique (12).

5. Procédé selon l'une quelconque des revendications 1 à 4,
**caractérisé en ce que** le promoteur d'adhérence (16) est lié au composant métallique (12) par un traitement thermique.

6. Procédé selon l'une quelconque des revendications 1 à 5,
**caractérisé en ce que** l'élément de chauffage (22), lequel permet de produire la chaleur nécessaire à l'assemblage, est une boucle à induction.

7. Procédé selon l'une quelconque des revendications 1 à 6,
**caractérisé en ce qu'**on utilise, comme matériau (2) thermoplastique du composant en plastique (14), du polyamide, et **en ce qu'**on utilise comme promoteur d'adhérence (16) un matériau formé à partir d'une peinture métallique contenant de l'amide.

8. Procédé selon la revendication 7,
**caractérisé en ce que** le traitement thermique est effectué à des températures supérieures au point de ramollissement du polyamide, de préférence situées dans une plage de températures allant jusqu'à 260 °C.

9. Procédé selon l'une quelconque des revendications 1 à 8,
**caractérisé en ce que** le promoteur d'adhérence (16) est réalisé avant l'assemblage comme couche de promoteur d'adhérence (3), laquelle est une double couche constituée d'une couche de primaire (3a) reposant directement sur le métal du composant métallique (12) et d'une couche de recouvrement (3b) reposant sur ladite couche de primaire.

10. Procédé selon l'une quelconque des revendications 1 à 9,
**caractérisé en ce qu'**une peinture utilisée pour former une couche (3) du promoteur d'adhérence (16), en particulier la peinture métallique, contient une proportion de matières solides allant de 8 à 25 % en masse, de préférence allant de 10 à 16 % en masse.

11. Procédé selon l'une quelconque des revendications 1 à 10,
**caractérisé en ce qu'**une peinture utilisée pour former une couche (3) du promoteur d'adhérence (16), en particulier la peinture métallique, contient en tant que solvant, de faibles proportions de pétrole aromatiques, du phénol, du crésol, du xylol, de l'alcool benzylique, du N-méthyl-2-pyrrolidone et/ou du N,N-diméthylacétamide.

12. Procédé selon l'une quelconque des revendications 1 à 9,
**caractérisé en ce qu'**une combinaison de résine synthétique utilisée pour former une couche (3) du promoteur d'adhérence (16), en particulier destinée à être reliée à un composant en plastique (14) constitué de polypropylène, est constituée de butanol, en particulier en une fraction allant de 1 à 2,5 % en masse sur la quantité globale, de triméthylcyclohexénone, en particulier en une fraction allant de 20 à 25 % en masse sur la quantité globale, d'un éther de monométhyle de propylène glycol, en particulier en une fraction allant de 25 à 50 % en masse sur la quantité globale, de fractions de pétrole présentant un point d'ébullition peu élevé, traité avec de l'hydrogène, en particulier en une fraction allant de 0,5 à 1 % en masse sur la quantité globale, ainsi que d'alcanes, en particulier en une fraction allant de 7,5 à 15 % en masse de la quantité globale.

13. Procédé selon la revendication 12,
**caractérisé en ce que** les alcanes sont un mélange d'alcanes présentant une longueur de chaîne allant de 11 à 15 atomes de carbone, en particulier en une fraction allant de 2,5 à 5 % en masse sur la quantité globale, et d'alcanes présentant une longueur de chaîne allant de 16 à 20 atomes de carbone, en particulier en une fraction allant de 5 à 10 % en masse.

14. Procédé selon l'une quelconque des revendications 1 à 9,
**caractérisé en ce qu'**une combinaison de résine artificielle utilisée pour former une couche (3) du promoteur d'adhérence (16), en particulier pour la liaison à un composant en plastique (14) constitué d'acrylonitrile-butadiène-styrène, est constituée de résines de bisphénol-A-épichlorhydrine présentant une masse molaire moyenne pouvant aller jusqu'à 700 g/mol, en particulier en une fraction allant de 1 à 2,5 % en masse sur la quantité globale, d'acétate de n-butyle, en particulier en une fraction allant d'environ 50 à 100 % en masse sur la quantité globale, et de fractions de pétrole lourdes aromatiques, en d'autres termes à point d'ébullition élevé, en particulier en une fraction pouvant aller jusqu'à 0,5 % en masse sur la quantité globale.

15. Corps composite en métal et en plastique (10), constitué d'un composant métallique (12) et d'un composant (14) constitué d'un plastique thermoplastique (2) ainsi que d'une couche de promoteur d'adhérence (3) constituée d'un promoteur d'adhérence (16) et disposée entre les composants (12, 14), fabriqué en particulier selon un procédé selon l'une quelconque des revendications 1 à 14,
**caractérisé en ce que** le composant en plastique (14) thermoplastique présente dans la zone d'un emplacement d'assemblage (26), au niveau du promoteur d'adhérence (16), une zone (30) refoulée.

16. Corps composite (10) selon la revendication 15,
**caractérisé en ce que** le composant en plastique (14) thermoplastique présente, dans la zone (30) refoulée, un bombement (28).

17. Corps composite (10) selon la revendication 16,
**caractérisé en ce que** le composant métallique (12) est une tôle, en particulier une tôle d'acier, et **en ce que** le composant en plastique (14) est une structure nervurée, qui forment de préférence une partie du châssis.

18. Corps composite (10) selon la revendication 16 ou 17,
**caractérisé en ce que** la résistance à la traction de la liaison entre le composant en plastique (14) et le composant métallique (12) est comprise dans la plage d'environ 8,5 ± 2,0 kN/cm².

19. Corps composite (10) selon l'une quelconque des revendications 16 à 18,
**caractérisé en ce que** le composant plastique (14) est constitué, en tant que matériau thermoplastique (2), d'un polyamide, d'un polypropylène ou d'un acrylonitrile-butadiène-styrène.

20. Corps composite (10) selon l'une quelconque des revendications 16 à 19,
**caractérisé en ce que** le promoteur d'adhérence (16) est formé à partir d'une peinture métallique, en particulier à partir d'une peinture métallique contenant de l'amide.

21. Corps composite (10) selon l'une quelconque des revendications 16 à 19,
**caractérisé en ce que** le promoteur d'adhérence (16) est constitué d'une combinaison de résines artificielles, qui contient majoritairement de l'acétate de butyle ou un mélange d'un ester d'alkyle de propylène glycol et d'un composé alkylé de cyclohexénone.

22. Corps composite (10) selon l'une quelconque des revendications 16 à 21,
**caractérisé en ce que** des zones de transition fondues les unes avec les autres sont formées dans une couche limite (G) entre la couche de promoteur d'adhérence (3) et le matériau thermoplastique (2), et/ou **en ce que** des zones (2b) présentant une phase polymère amorphe sont formées dans le matériau thermoplastique (2).

23. Corps composite (10) selon l'une quelconque des revendications 16 à 22,
**caractérisé en ce que** le promoteur d'adhérence (16) contient du graphite aux fins de l'obtention d'une conductivité électrique et d'une soudabilité ainsi que de la possibilité d'un revêtement par laquage cathodique d'immersion.

24. Corps composite (10) selon l'une quelconque des revendications 16 à 23,
**caractérisé en ce que** le composant métallique (12) est constitué d'un feuillard laminé à froid, de préférence relevant des qualités DC 01 à DC 04 selon la norme DIN EN 10 139, d'une tôle fine ou extra-fine ou d'un feuillard (1) en acier inoxydable, en aluminium ou en métaux non ferreux.

25. Corps composite (10) selon l'une quelconque des revendications 16 à 24
**caractérisé en ce que** la couche de promoteur d'adhérence (3) est une double couche constituée d'une couche de primaire (3a) reposant directement sur la couche métallique (1) et d'une couche de recouvrement (3b) reposant sur ladite couche de primaire.

26. Corps composite (10) selon l'une quelconque des revendications 16 à 25,
**caractérisé en ce qu'**une épaisseur (D) de la couche de promoteur d'adhérence (3) réalisée sous la forme d'une couche simple ou d'une couche double est comprise dans la plage allant de 3 à 30 µm, en particulier dans la plage allant de 6 à 23 µm, de préférence dans la plage allant de 10 à 15 µm.

27. Corps composite (10) selon l'une quelconque des revendications 16 à 26,
**caractérisé en ce qu'**une couche de passivation et/ou de protection (4) est appliquée sous la couche de promoteur d'adhérence (3), sur la couche métallique (1).

28. Utilisation d'un composant en plastique (14) thermoplastique, pour un procédé selon l'une quelconque des revendications 1 à 15, ou servant à la fabrication d'un corps composite (10) selon l'une quelconque des revendications 16 à 27.

29. Utilisation selon la revendication 28,
**caractérisée en ce que** le composant en plastique (14) est constitué d'une matière plastique amorphe ou en partie cristalline, non renforcée, renforcée ou remplie, par exemple d'un polyamide, d'un polyester, d'une polyoléfine, d'un polystyrène, d'un copolymère d'acrylonitrile styrène, d'un copolymère d'acrylonitrile-butadiène-styrène, d'un polycarbonate, d'un oxyde de propylène, d'un sulfure de polyphénylène, d'un polyimide, d'une polycétone, ou d'un mélange desdites substances.

30. Utilisation selon la revendication 28 ou 29,
**caractérisée en ce que** le composant en plastique (14) présente, dans une zone de pointe (34) définie aux fins de la liaison à un composant métallique, par exemple par un chanfrein (32), un rétrécissement de section transversale (36), qui présente, dans le cas extrême, une réalisation uniquement linéaire ou sous la forme de point.
